# EUROPÄISCHE PATENTSCHRIFT

(11) **EP 2 848 365 B1**
(45) Veröffentlichungstag und Bekanntmachung des Hinweises auf die Patenterteilung: **12.09.2018**
(21) Anmeldenummer: 13184325.2
(22) Anmeldetag: 13.09.2013
(51) Int. Cl.: B23Q 39/02, B23B 3/30, B23Q 7/04

(54) **Drehmaschine mit vertikalen Arbeitsspindeln und hauptzeitparalleler Be- und Entladung, und Verfahren**
Lathe with vertical work spindles and parallel loading and unloading, and method therefor
Tour doté de broches de travail verticales et d'une charge et décharge en temps masqué, et méthode

(43) Veröffentlichungstag der Anmeldung: 18.03.2015
(73) Patentinhaber: WZT Wendland-Zerspanungs-Technik GmbH, 29456 Hitzacker (DE)
(72) Erfinder: Prahler, Ralf, 29481 Karwitz (DE)
(74) Vertreter: Raffay & Fleck

(56) Entgegenhaltungen:
- DE-A1-102012 004 709
- DE-B3-102011 119 787
- US-A1- 2013 042 732

## Beschreibung

Die Erfindung betrifft eine Drehmaschine mit hauptzeitparalleler Be- und Entladung sowie ein Verfahren zur spanenden Bearbeitung.

Es ist aus der DE 10 2009 052 984 A1 bekannt derartige Maschinen mit zwei Spindeln auf einem Schlitten auszurüsten, sodass eine Spindel be-/entladen werden kann, während die andere zur Bearbeitung genutzt wird. Auch sind horizontal verfahrbare Spindeln bekannt.

Aus der DE 10 2011 119 787 ist ein Doppelspindler mit vertikalen Drehachsen bekannt, der nach dem Pickupverfahren mit verfahrbaren Spindeln arbeitet.

Die Verfahrbarkeit der Spindeln bringt jedoch Nachteile mit sich. Darüber hinaus ist insbesondere auch eine weitere Stabilisierung der Werkstücke während der spanenden Bearbeitung wünschenswert, dies erfordert bei einer Anordnung nach der DE 10 2011 119 787 einen erhöhten Synchronisationsaufwand.

Dies zu ermöglichen und die genannten Nachteile zu vermeiden, ist Aufgabe der vorliegenden Erfindung.

Gelöst wird die Aufgabe durch eine Drehmaschine gemäß Anspruch 1 und ein Verfahren gemäß Anspruch 7. Die Unteransprüche 2 bis 6 und 8 bis 11 geben vorteilhafte Weiterbildungen an.

Gelöst wird die Aufgabe vorrichtungsgemäß durch eine Drehmaschine zur spanenden Bearbeitung von Werkstücken mit hauptzeitparalleler Be- und Entladung, aufweisend mindestens zwei Arbeitsspindeln mit jeweils einer Aufnahme für eines der Werkstücke, wobei die Rotationsachsen der Arbeitsspindeln vertikal verlaufen und mit mindestens einem Werkzeugträger. Dabei sind die Spindeln stationär an der Drehmaschine angeordnet, in dieser also nicht verfahrbar. Der Werkzeugträger ist mindestens zur Ausführung von zweiachsigen Vorschubbewegungen senkrecht und parallel zu den Rotationsachsen der Arbeitsspindeln und zur Aufnahme mindestens eines Werkzeuges ausgebildet. Somit verfügt der Werkzeugträger über Bewegungsfreiheit zumindest in vertikaler und in einer horizontalen Richtung. Dies kann beispielsweise über einen Kreuzschlitten realisiert werden. Der Kreuzschlitten ist dabei insbesondere so eingerichtet, dass er auch geeignet ist, den Werkzeugträger von einer Position zur Bearbeitung eines ersten in einer ersten Aufnahme aufgenommenen Werkstückes in eine Position zur Bearbeitung eines zweiten in einer zweiten Aufnahme aufgenommenen Werkstückes zu verfahren.

Darüber hinaus weist die Drehmaschine mindestens einen Be- und Entladeautomaten zur Beladung der Aufnahmen mit den Werkstücken und zur Entladung der Werkstücke aus den Aufnahmen auf. Gekennzeichnet ist die Drehmaschine dadurch, dass der Werkzeugträger derart verfahrbar ausgebildet ist, dass er sowohl ein in einer ersten der Aufnahmen aufgenommenes Werkstück als auch ein in einer zweiten der Aufnahmen aufgenommenes Werkstück mit seinem mindestens einen Werkzeug bearbeiten kann. Mit einer solchen Drehmaschine kann eine hauptzeitparallele Be- und Entladung von zwei Arbeitsspindeln abwechselnd durchgeführt werden. Somit kann die Be- und Entladung einer ersten der Arbeitsspindeln sich mit der Bearbeitung eines Werkstücks aufgenommen in der Aufnahme einer zweiten der Arbeitsspindeln zeitlich überschneiden. Ein solches Verfahren kann auch mit mehr als zwei Arbeitsspindeln durchgeführt werden, wobei sich die Bearbeitung und die Be- und Entladezeiten zeitlich überschneiden, zumindest jeweils in Bezug auf zwei der Arbeitsspindeln.

Zur entsprechenden Ansteuerung kann die Drehmaschine eine entsprechende Steuerung aufweisen. Diese kann insbesondere eingerichtet sein, ein erfindungsgemäßes Verfahren mit der Drehmaschine zu bewirken.

Durch die Vorsehung von vertikal angeordneten Arbeitsspindeln kann die Stabilität der Bearbeitung erhöht werden und ist eine raumsparende Anordnung mehrerer Arbeitsspindeln möglich. Darüber hinaus kann durch die Verwendung eines Reitstockes die Stabilität weiter gefördert werden.

Vorteilhafterweise ist gemäß Anspruch 2 mindestens einer oder jeder Arbeitsspindel ein auf der Rotationsachse der zugeordneten Arbeitsspindel verfahrbarer Reitstock zugeordnet. Dabei sind die Aufnahme und der Reitstock der Arbeitsspindel so eingerichtet, dass ein Werkstück an zwei Enden gehalten bzw. gestützt werden kann. In der Regel wird das Werkstück in der Aufnahme gehalten und vom Reitstock der jeweiligen Arbeitsspindel gestützt.

Durch die erfindungsgemäße Anordnung von Arbeitsspindeln mit Reitstöcken und Be- und Entladeautomatik ist dabei eine hauptzeitparallele Be- und Entladung möglich. Der Reitstock ist dabei auf der Rotationsachse der zugehörigen Arbeitsspindel verfahrbar angeordnet, um sich von einem aufgenommenen Werkstück lösen zu können bzw. ein in der Aufnahme aufgenommenes Werkstück unterstützen zu können. Jeweils zur Be- und Entladung wird daher der Reitstock entlang der Rotationsachse verfahren.

Vorteilhafterweise umfasst der mindestens eine Be- und Entladeautomat mindestens einen Roboterarm. Durch einen Roboterarm kann auf einfache und flexible Weise ein solcher Be- und Entladeautomat realisiert werden. So kann ein Roboterarm beispielsweise eingerichtet sein, ein Werkstück von einer Zuführung, beispielsweise einem Fließband, aufzunehmen und in die Aufnahme einer Arbeitsspindel einzusetzen, sowie nach der Bearbeitung das Werkstück wieder zu entnehmen und auf eine Abführung, beispielsweise ebenfalls ein Fließband oder das gleiche Fließband, zu setzen.

Denkbar ist es aber auch, gemäß Anspruch 4, pro Arbeitsspindel ein oder zwei Roboterarme als Be- und Entladeautomat vorzusehen. In einer solchen Ausgestaltung ist es möglich, die pro Werkstück benötigte Zeitspanne weiter zu verkürzen, insbesondere wenn die Dauer der spanenden Bearbeitung vergleichsweise kurz ist. So kann beispielsweise ein Roboterarm pro Arbeitsspindel für die Be- und Entladung vorgesehen sein und Werkstücke von einer Zuführung in die Aufnahme einsetzen und von der Aufnahme zu einer Abführung überbringen. Es ist jedoch auch möglich, für die Be- und Entladung einer Arbeitsspindel jeweils zwei Roboterarme vorzusehen. So kann beispielsweise ein Roboterarm für die Beladung und ein Roboterarm für die Entladung vorgesehen werden. Dadurch lässt sich die notwendige Zeitdauer weiter verkürzen. In einem solchen Fall ist es beispielsweise denkbar, die jeweils für eine Arbeitsspindel vorgesehenen Roboterarme von unterschiedlichen Seiten der Arbeitsspindel aus arbeiten zu lassen und beispielsweise einen Fluss der Werkstücker von der einen Seite der Arbeitsspindel mit dem Roboterarm zur Arbeitsspindel auf die andere Seite der Arbeitsspindel unter Verwendung des zweiten Roboterarmes einzurichten.

Dementsprechend wären die Roboterarme vorteilhafterweise in Bezug auf die Rotationsachse der Arbeitsspindel in unterschiedlichen Halbräumen, insbesondere diametral gegenüberliegend oder zumindest um mindestens 90° versetzt, anzuordnen.

Denkbar ist es aber auch, gemäß Anspruch 5 jeweils pro zwei Arbeitsspindeln nur ein Roboterarm als Be- und Entladeautomat vorzusehen. Dabei kann der eine Roboterarm zur Be- und Entladung einer Arbeitsspindel verwendet, während die zweite Arbeitsspindel zur spanenden Bearbeitung genutzt wird. Im Anschluss daran wird dann die Verwendung des Roboterarmes und insbesondere auch des Werkzeugträgers zwischen den Arbeitsspindeln gewechselt.

Mit besonderem Vorteil ist pro Arbeitsspindel ein verfahrbares Schott vorgesehen. Das Schott und die Vorrichtung zur Realisierung der Verfahrbarkeit des Schotts sind dabei jeweils so ausgeführt, dass das Schott derart verfahren werden kann, dass es die Aufnahme der jeweiligen Arbeitsspindel vor fliegenden Spänen einer zeitgleich stattfindenden Bearbeitung, insbesondere eines in einer benachbarten Arbeitsspindel aufgenommenen Werkstückes, schützen kann und zur Bearbeitung eines in der zugeordneten Arbeitsspindel aufgenommenen Werkstückes den Zugriff für mindestens ein Werkzeug des mindestens einen Werkzeugträgers auf das in der zugeordneten Arbeitsspindel aufgenommene Werkstück freigibt.

Durch derartige Vorkehrungen kann die Verdreckung der Aufnahmen mit Spänen und anderem Material verringert oder verhindert werden.

Darüber hinaus ist es vorteilhaft, Tore zum Verschließen des Arbeitsraumes und zum Gewähren von Zugriff zu den Aufnahmen vorzusehen. Insbesondere kann für jede Arbeitsspindel ein entsprechendes Tor vorgesehen werden, das während der Bearbeitung eines aufgenommenen Werkstückes geschlossen ist und dadurch den Arbeitsraum insbesondere abschließt. Zur Be- und Entladung kann das Tor dann vorteilhafterweise geöffnet werden und insbesondere dem Roboterarm Zugriff zum Werkstück gewähren.

Gelöst wird die Aufgabe auch durch ein Verfahren zur spanenden Bearbeitung von in Arbeitsspindeln mit vertikalen Rotationsachsen aufgenommenen Werkstücken, wobei mindestens zwei Arbeitsspindeln mit vertikalen Rotationsachsen und jeweils einer Aufnahme zur Aufnahme eines der Werkstücke vorgehalten werden. Darüber hinaus wird mindestens ein Be- und Entladeautomat vorgehalten.

### Gekennzeichnet ist das durch folgende Merkmale:

Zur Beladung der Arbeitsspindeln wird jeweils mit dem mindestens einen Be- und Entladeautomat ein Werkstück aufgenommen und in die Aufnahme der zu beladenden Arbeitsspindel verbracht.

Zur Entladung der Arbeitsspindel wird mit dem mindestens einen Be- und Entladeautomaten das zu entladende Werkstück aufgenommen und aus der Aufnahme der zu entladenden Arbeitsspindel entfernt.

Dabei überschneidet sich die Ent- und Beladung von Werkstücken in der Aufnahme einer ersten der Arbeitsspindel zeitlich mit der Bearbeitung eines Werkstückes in der Aufnahme einer zweiten der Arbeitsspindeln.

Ein Werkzeugträger des mindestens einen Werkzeugträgers wird zur Bearbeitung von in der ersten Aufnahme aufgenommenen Werkstücken und in der zweiten Aufnahme aufgenommenen Werkstücke zeitlich nacheinander verwendet.

So kann zeitlich effizient und auf platzsparende Art und Weise sowie zuverlässig und stabil eine hauptzeitparallele spanende Bearbeitung eines um eine horizontale Achse drehenden Werkstückes erfolgen, wobei das Werkstück zweiseitig gestützt sein kann. Dabei erfolgt die Bearbeitung von in unterschiedlichen Arbeitsspindeln aufgenommenen Werkstücken durch Werkzeuge eines verfahrbaren Werkzeugträgers, jedenfalls in Bezug auf zwei Arbeitsspindeln.

Dies ermöglicht auf kleinem Raum und mit vergleichsweise geringem Investitionsaufwand eine durchsatzstarke spanende Bearbeitung von Werkstücken bei gleichzeitig hoher Flexibilität.

Vorteilhafterweise findet der Betrieb der einzelnen Arbeitsspindeln, insbesondere ihre Be- und Entladung sowie die spanende Bearbeitung, zwischen den einzelnen Arbeitsspindeln zeitlich phasenversetzt statt. Der Phasenversatz ist insbesondere symmetrisch zwischen den einzelnen Arbeitsspindeln verteilt. Werden beispielsweise zwei Arbeitsspindeln eingesetzt, so ist vorteilhafterweise ein Phasenversatz von 180° zu wählen. Bei mehreren Arbeitsspindeln ist dies vorteilhafterweise entsprechend abweichend symmetrisch zu verteilen. So kann bei drei Arbeitsspindeln insbesondere ein Versatz von 120° gewählt werden.

Mit Vorteil beinhaltet das Verfahren nach Anspruch 8 das Vorhalten eines auf der Rotationsachse der jeweiligen Arbeitsspindel verfahrbarer Reitstock für mindestens eine Arbeitsspindel oder pro vorgehaltener Arbeitsspindel. In diesem Fall wird zum Beladen der Arbeitsspindeln mit zugeordnetem Reitstock jeweils nach dem Aufnehmen des Werkstücks in der Aufnahme der zu beladenen Arbeitsspindel der Reitstock der zu beladenen Arbeitsspindel in Richtung zur Aufnahme der zu beladenden Arbeitsspindel hin bis zum Stützen des Werkstückes in der Aufnahme der zu beladenden Arbeitsspindel auf die Aufnahme der zu beladenden Arbeitsspindel hin bewegt. Auch wird wird zum Entladen der Arbeitsspindeln mit zugeordnetem Reitstock jeweils vor dem Aufnehmen des zu entladende Werkstücks mit dem mindestens einen Be- und Entladeautomaten der Reitstock der zu entladenden Arbeitsspindel von der Aufnahme der zu entladenden Arbeitsspindel weg bewegt.

Mit Vorteil kann mindestens eine erste der Arbeitsspindel keinen zugeordneten Reitstock aufweist oder, falls eine solcher vorhanden ist nicht genutzt werden und ein zu bearbeitendes Werkstück zunächst in die Aufnahme der ersten Arbeitsspindel geladen werden und insbesondere zumindest, insbesondere ausschließlich eine Planseitenbearbeitung, Zentrierung, Futterbearbeitung und oder Stirnseitenbearbeitung einer ersten Seite des aufgenommenen Werkstücks (8) durchgeführt werden. Anschließend kann das Werkstück in eine Aufnahme einer zweiten Arbeitsspindel mit zugeordnetem Reitdorn geladen werden. Dies erfolg durch Entladen aus der ersten Arbeitsspindel und Beladen der zweiten Arbeitsspindel, wobei die Vorgänge des Entladens der ersten und Beladens der zweiten Arbeitsspindel auch von einem gemeinsamen Be- und Entladeautomaten, insbesondere Robotorarm durchgeführt werden können, insbesondere ohne das Werkstück zwischen Entladen der ersten und Beladen der zweiten Arbeitsspindel abzustellen. Somit stellt das Aufnehmen des Werkstücks zur Entladung insbesondere auch das Aufnehmen des Werkstücks zum Beladen dar. Vorteilhafterweise wird das Werkstück zum Beladen der zweiten Arbeitsspindel an der ersten Seite des Werkstücks mit dem Reitdorn der zweiten Arbeitsspindel durch Verfahren des Reitdorns auf die Aufnahme der zweiten Arbeitsspindel zu gestützt, insbesondere durch Ausnutzung von bei der Bearbeitung in der ersten Arbeitsspindel geschaffenen Strukturen.

Mit Vorteil kann gemäß Anspruch 10 ein Roboterarm als Be- und Entladeautomat für die Be- und Entladung von zwei Aufnahmen verwendet werden. Auch mehrere Roboterarme lassen sich für die Be- und Entladung von zwei Aufnahmen verwenden. So kann beispielsweise, auch bei mehreren Arbeitsspindeln, pro Aufnahme ein Roboterarm zur Be- und Entladung verwendet werden oder pro Aufnahme auch ein Roboterarm zur Beladung und ein Roboterarm zur Entladung verwendet werden. Mit Vorteil kann bei Be- und Entladung durch unterschiedliche Roboterarme eine Beladung von einer Seite, insbesondere aus einem Halbraum in Bezug auf die Rotationsachse der Aufnahme und die Entladung aus einem anderen Halbraum bzw. von einer anderen Seite, insbesondere von diametral gegenüberliegend, oder zumindest um mindestens 90° versetzt, erfolgen.

Dadurch lässt sich die für die Be- und Entladung benötigte Zeitspanne weiter reduzieren.

Mit besonderem Vorteil wird gemäß Anspruch 11 jeder Arbeitsspindel ein verfahrbares Schott zugeordnet und die Schotte jeweils so verfahren, dass während der Be- und Entladung der zugeordneten Arbeitsspindel das Schott der zu be- oder entladenden Arbeitsspindel so angeordnet ist, dass es den Flug von Spänen in die Aufnahme der zu be- und entladenden Arbeitsspindel hindert, insbesondere zumindest während eine Bearbeitung, insbesondere eines in einer benachbarten Aufnahme aufgenommenen Werkstückes, durchgeführt wird, und vor der Bearbeitung eines in eine Aufnahme einer Arbeitsspindel aufgenommenen Werkstückes das zugeordnete Schott so bewegt wird, dass der Zugang zum aufgenommenen Werkstück für mindestens ein Werkzeug des mindestens einen Werkzeugträgers freigegeben wird.

Durch ein solches Vorgehen lassen sich Aufnahmen bei der Be- und Entladung und auch entsprechende Be- und Entladeautomaten vor Verschmutzung und Verdreckung schützen.

Vorteilhafterweise können Tore, insbesondere jeweils eins pro Arbeitsspindel vorgesehen werden, die während der Bearbeitung eines in der jeweiligen Aufnahme der jeweiligen Arbeitsspindel aufgenommenen Werkstückes geschlossen gehalten werden und so insbesondere den Arbeitsraum nach außen hin bzw. zur Zu- und Abführung hin verschließen. Zur Be- und Entladung der jeweiligen Arbeitsspindel wird dann das Tor jeweils geöffnet, insbesondere anschließend wieder verschlossen.

Weitere vorteilhafte Ausführungen sollen rein exemplarisch und nicht beschreibend anhand der nachfolgenden Beispiele geschildert werden. Dazu zeigen rein schematischen die Figuren:
- Fig. 1: eine rückwärtige Ansicht einer erfindungsgemäßen Drehmaschine mit zwei Arbeitsspindeln und einem Roboterarm;
- Fig. 2: eine Detailansicht des Roboterarmes mit einem Ausschnitt der erfindungsgemäßen Drehmaschine aus Fig. 1;
- Fig. 3: eine Ansicht des Arbeitsraumes der erfindungsgemäßen Drehmaschine aus Fig. 1 während der spanenden in Bearbeitungsposition mit der rechte Arbeitsspindel und
- Fig. 4: eine Ansicht des Arbeitsraumes der Fig. 1 in einem abweichenden Betriebszustand in Bearbeitungsposition mit der linken Arbeitsspindel.

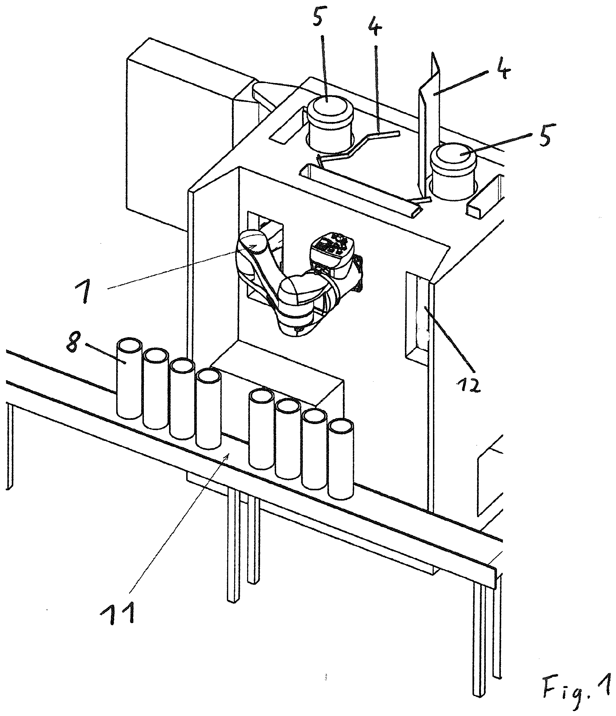

Fig. 1 zeigt eine rückwärtige Ansicht einer erfindungsgemäßen Drehmaschine aufweisend einen Roboterarm 1, zwei Schottbleche 4 sowie zwei Antriebe 5 und Tore 12. Darüber hinaus gezeigt ist ein Fließband 11 mit Werkstücken 8. Zu erkennen ist, dass die Drehmaschine über zwei Öffnungen für den Eingriff des Roboterarmes 1 verfügt, die durch Tore 12 verschlossen werden können. Darüber hinaus sind jeder Arbeitsspindel ein Antrieb 5 und ein Schottblech 4 zuordnet. Die Schottbleche 4 sind dabei horizontal verfahrbar. In dem in Fig. 1 gezeigten Betriebszustand der Drehmaschine wird die Arbeitsspindel, die vom rechts in der Figur gezeigten Antrieb 5 getrieben wird, verwendet, um eine spanende Bearbeitung durchzuführen. Dafür ist das Tor 12 verschlossen und ist das Schottblech 4 nach oben heraus verfahren. Der nicht gezeigte Werkzeugträger bearbeitet zurzeit mit einem Werkzeug das in der Arbeitsspindel eingespannte und vom Antrieb 5 angetriebene Werkstück 8. Die in der Figur links angeordnete aber nicht gezeigte Arbeitsspindel mit dem in der Figur links gezeigten Antrieb 5 wird zurzeit mit einem Werkstück 8 bestückt, das zuvor vom Fließband 11 entnommen wurde. Dazu befindet sich der Roboterarm 1 innerhalb des Arbeitsraumes und ist das linke, nicht gezeigte Tor 12 zum Arbeitsraum geöffnet und das linke Schottblech 4 herabgelassen, sodass es die Aufnahme der linken Arbeitsspindel vor Spänen der Bearbeitung des Werkstückes, das in der rechten Arbeitsspindel aufgenommen ist, schützt.

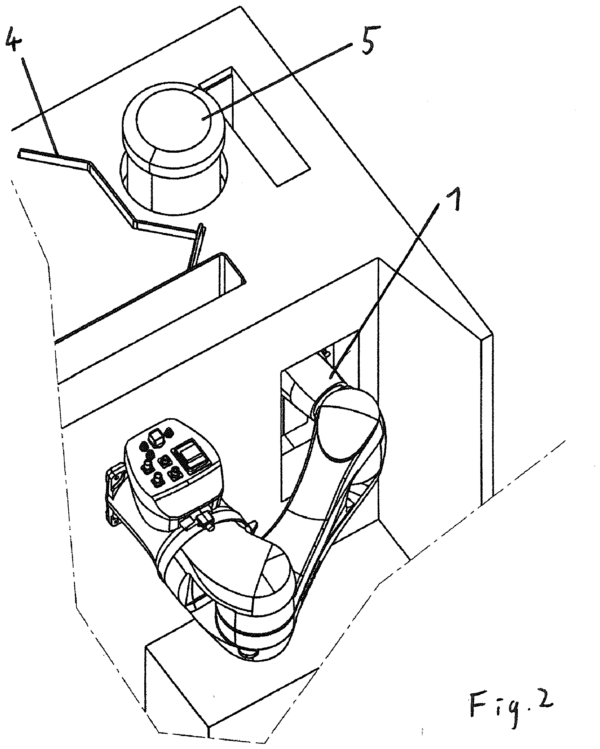

Fig. 2 zeigt einen Detailausschnitt der Drehmaschine aus Fig. 1, jedoch in abweichendem Betriebszustand. In Fig. 2 gezeigt ist der Zustand, in dem der Roboterarm die in Fig. 1 rechts befindliche Arbeitsspindel neu belädt und dazu das in der Fig. 1 rechts angeordnete Schottblech 4 sich im heruntergelassenen Zustand befindet und somit die von dem in Fig. 2 gezeigten Antrieb 5 angetriebene Aufnahme vor Spänen und Verdreckung schützt. Der Roboterarm 1 befindet sich dazu im Arbeitsraum.

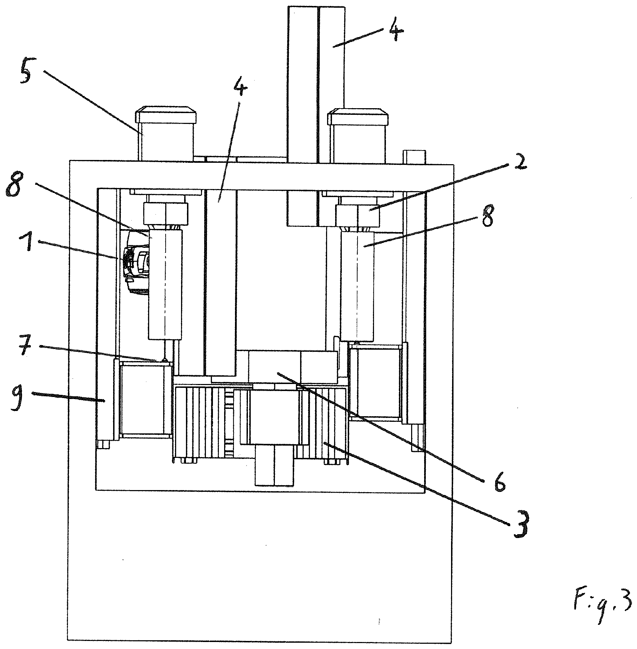

Fig. 3 zeigt eine Ansicht des Arbeitsraumes der in Figuren 1 und 2 gezeigten Drehmaschine. Zu erkennen sind die Schottbleche 4, die Antriebe 5 sowie die Aufnahmen 2 und der Roboterarm 1. Darüber hinaus zu erkennen sind zwei Reitstockschlitten 9 mit jeweils einem Reitstock7. Des Weiteren gezeigt sind in den Aufnahmen 2 aufgenommene Werkstücke 8. Im gezeigten Betriebszustand wird das in der Fig. 3 rechts befindliche Werkstück 8 von einem Werkzeug des Werkzeugträgers 6 bearbeitet. Dazu ist das in der Figur 3 rechts gezeigte Schottblech 4 nach oben verfahren, um das Werkstück 8 zur Bearbeitung freizugeben. Das linke in der Fig. 3 gezeigte Werkstück 8 soll im dargestellten Betriebszustand vom Roboterarm 1, der durch die rückseitige Öffnung in den Arbeitsraum 10 eingreift, entnommen werden. Dazu ist das Tor geöffnet und das linke Schottblech 4 zum Schutz vor Spänen der Bearbeitung des rechten Werkstückes 8 heruntergelassen. Darüber hinaus zu erkennen ist der Kreuzschlitten 3, mit dem der Werkzeugträger horizontal und vertikal verfahrbar angeordnet ist. Dadurch kann der Werkzeugträger 6 auch zwischen einer Bearbeitung eines in der rechten Aufnahme 2 eingespannten Werkstückes 8 und der Bearbeitung eines in der linken Aufnahme 2 aufgenommenen Werkstückes 8 verfahren werden. Zu erkennen ist auch, dass der rechte Reitstock 7 unter Verwendung seines Reitstockschlittens 9 nach oben gefahren ist, sodass er das Werkstück 8 zur Bearbeitung stützen kann. Demgegenüber ist der links in Fig. 3 gezeigte Reitstock 7 mit seinem Reitstockschlitten 9 nach unten verfahren, um eine Entnahme des in der Fig. 3 links gezeigten Werkstückes 8 aus der in Fig. 3 links gezeigten Aufnahme 2 durch den Roboterarm 1 zu ermöglichen.

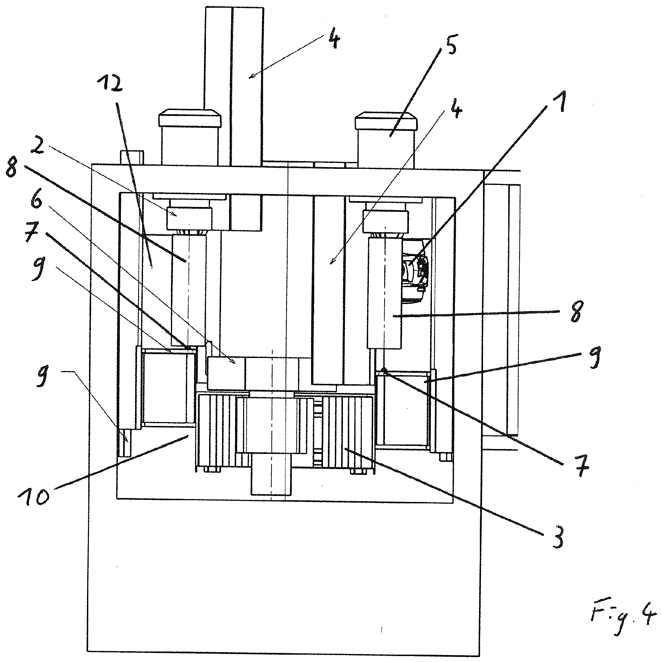

Fig. 4 zeigt eine Ansicht des Arbeitsraumes aus Fig. 3, jedoch in einem abweichenden Betriebszustand. Im hier gezeigten Zustand wird das in Fig. 4 links gezeigte Werkstück 8 bei geschlossenem Tor 12 und an das Werkstück 8 herangefahrenem Reitstock 7 und geöffnetem Schottblech 4 von einem Werkzeug des Werkzeugträgers 6 spanend bearbeitet. Währenddessen wird das rechts in der Fig. 4 gezeigte Werkstück 8 vom Roboterarm 1 bei geöffnetem Tor aus der in der Fig. 4 rechts gezeigten Aufnahme 2 entfernt. Dazu ist der in Fig. 4 rechts gezeigte Reitstock 7 unter Verwendung seines Reitstockschlittens 9 nach unten verfahren, um eine Entnahme zu ermöglichen.

### Bezugszeichenliste

- 1: Robotorarm
- 2: Arbeitsspindel
- 3: Kreuzschlitten
- 4: Schottblech
- 5: Antrieb
- 6: Werkzeugrevolver
- 7: Reitstock
- 8: Werkstück
- 9: Reitstockschlitten
- 10: Arbeitsraum
- 11: Fließband
- 12: Tor

## Patentansprüche

1. Drehmaschine zur spanenden Bearbeitung von Werkstücken (8) mit hauptzeitparalleler Be- und Entladung aufweisend mindestens zwei Arbeitsspindeln mit jeweils einer Aufnahme (2) für ein Werkstück (8), wobei die Rotationsachsen der Arbeitsspindeln vertikal verlaufen, und mit mindestens einem Werkzeugträger (6), der zur Aufnahme mindestens eines Werkzeuges ausgebildet ist und aufweisend mindestens einen Be- und Entladeautomaten (1) wobei der mindestens eine Werkzeugträger (6) so verfahrbar ist, dass er sowohl ein in einer ersten der Aufnahmen (2) aufgenommenes als auch ein in einer zweiten der Aufnahmen (2) aufgenommenes Werkstück (8) mit seinem mindestens einen Werkzeug bearbeiten kann,
**dadurch gekennzeichnet, dass**
die mindestens zwei Arbeitsspindeln stationär angeordnet sind und der Werkzeugträger (6) mindestens zur zweiachsigen Vorschubbewegung senkrecht und parallel zu den Rotationsachsen der Arbeitsspindeln eingerichtet ist und der mindestens eine Be-und Entladeautomat (1) zu Be- und Entladung der Aufnahmen (2) mit Werkstücken ausgebildet ist.

2. Drehmaschine nach Anspruch 1, **dadurch gekennzeichnet, dass** mindestens einer, insbesondere jeder, Arbeitsspindel ein auf der Rotationsachse der Arbeitsspindel verfahrbarer Reitstock (7) zugeordnet ist, wobei Aufnahme (2) und Reitstock (7) jeder Arbeitsspindel eingerichtet sind, ein Werkstück (8) an zwei Enden zu halten und/oder zu stützen.

3. Drehmaschine nach einem der vorstehenden Ansprüche, **dadurch gekennzeichnet, dass** der mindestens eine Be- und Entladeautomat (1) mindestens einen Robotorarm (1) umfasst.

4. Drehmaschine nach einem der vorstehenden Ansprüche, **dadurch gekennzeichnet, dass** pro Arbeitsspindel ein oder zwei Robotorarme als Be- und Entladeautomat vorgesehen sind.

5. Drehmaschine nach einem der vorstehenden Ansprüche, **dadurch gekennzeichnet, dass** pro zwei Arbeitsspindeln ein Robotorarm als Be-und Entladeautomat vorgesehen ist.

6. Drehmaschine nach einem der vorstehenden Ansprüche, **dadurch gekennzeichnet, dass** pro Arbeitsspindeln ein verfahrbares Schott (4) vorgesehen ist.

7. Verfahren zur spanenden Bearbeitung von in Arbeitsspindeln mit vertikalen Rotationsachsen aufgenommenen Werkstücken (8), wobei mindestens zwei stationär angeordnete Arbeitsspindeln mit vertikalen Rotationsachsen und jeweils einer Aufnahme (2) zur Aufnahme eines Werkstücks (8) vorgehalten werden und mindestens ein Be- und Entladeautomat (1) vorgehalten wird und wobei mindestens ein Werkzeugträger (6) vorgehalten wird,
**dadurch gekennzeichnet, dass**
der Werkzeugträger (6) mindestens zur zweiachsigen Vorschubbewegung senkrecht und parallel zu den Rotationsachsen der Arbeitsspindeln eingerichtet ist und dass zur Beladung der Arbeitsspindeln jeweils mit dem mindestens einen Be- und Entladeautomat (1) ein Werkstück (8) aufgenommen wird und in die Aufnahme (2) der zu beladenen Arbeitsspindel verbracht wird und zur Entladung der Arbeitsspindeln jeweils mit dem mindestens einen Be-und Entladeautomat (1) das zu entladene Werkstück (8) aufgenommen und aus der Aufnahme (2) der zu entladenen Arbeitsspindel entfernt wird und
wobei die Ent- und Beladung von Werkstücken (8) in der Aufnahme (2) einer ersten der Arbeitsspindeln sich zeitlich mit der Bearbeitung eines Werkstücks (8) in der Aufnahme (2) einer zweiten der Arbeitsspindeln überschneidet und mindestens ein Werkzeugträger des mindestens einen Werkzeugträgers (6) zur Bearbeitung von in der ersten Aufnahme (2) aufgenommenen Werkstücken (8) und in der zweiten Aufnahme (2) aufgenommenen Werkstücken (8) verwendet wird.

8. Verfahren nach dem Anspruch 7, wobei für mindestens eine der Arbeitsspindel, insbesondere pro vorgehaltener Arbeitsspindel, ein auf der Rotationsachse der jeweiligen Arbeitsspindel verfahrbarer Reitstock (7) vorgehalten wird und
zur Beladung der Arbeitsspindeln an mindestens einer der Arbeitsspindeln, insbesondere an den Arbeitsspindeln jeweils, nach dem Verbringen des Werkstücks in die Aufnahme (2) der zu beladenen Arbeitsspindel der Reitstock (7) der zu beladenen Arbeitsspindel in Richtung zur Aufnahme (2) der zu beladenen Arbeitsspindel bis zum Stützen des Werkstücks (8) in der Aufnahme der beladenen Arbeitsspindel auf die Aufnahme (2) der zu beladenen Arbeitsspindel zubewegt wird und
zur Entladung mindestens einer der Arbeitsspindeln, insbesondere der Arbeitsspindeln jeweils, vor dem Aufnehmen des zu entladene Werkstück (8) mit dem mindestens einen Be- und Entladeautomat (1) der Reitstock (7) der zu entladenen Arbeitsspindel in Richtung von der Aufnahme (2) der zu entladenen Arbeitsspindel weg bewegt wird.

9. Verfahren nach Anspruch 8, wobei mindestens eine erste der Arbeitsspindel keinen zugeordneten Reitstock aufweist und ein zu bearbeitendes Werkstück (8) zunächst in die Aufnahme der ersten Arbeitsspindel geladen wird und insbesondere zumindest, insbesondere ausschließlich eine Planseitenbearbeitung, Zentrierung, Futterbearbeitung und oder Stirnseitenbearbeitung einer ersten Seite des aufgenommenen Werkstücks (8) durchgeführt wird und anschließend das Werkstück (8) in eine Aufnahme einer zweiten Arbeitsspindel mit zugeordnetem Reitdorn geladen wird und an der ersten Seite des Werkstücks (8) mit dem Reitdorn gestützt wird und anschließend mit der zweiten Arbeitsspindel spanend bearbeitet wird.

10. Verfahren nach einem der Ansprüche 7 bis 9, wobei zur Be- und Entladung der ersten und der zweiten Aufnahme ein Robotorarm (1) als Be- und Entladeautomat (1) verwendet wird.

11. Verfahren nach einem der Ansprüche 7 bis 10, wobei jeder Arbeitsspindel ein verfahrbares Schott zugeordnet ist und die Schotte jeweils so verfahren werden, dass während der Be- und Entladung der zugeordneten Arbeitsspindel das Schott der zu be- oder entladenen Arbeitsspindel so angeordnet ist, dass es den Flug von Spänen in die Aufnahme der zu be- oder entladenen Arbeitsspindel hindert und vor der Bearbeitung eines in einer Aufnahme einer Arbeitsspindel aufgenommenen Werkstücks das zugeordnete Schott so bewegt wird, dass der Zugang zum aufgenommenen Werkstück für mindestens ein Werkzeug des mindestens einen Werkzeugträgers freigegeben wird.

## Claims

1. A lathe for machining workpieces (8) with parallel time loading and unloading comprising at least two work spindles each having a receptacle (2) for a workpiece (8),
wherein the axes of rotation of the work spindles run vertically, and with at least one tool carrier (6), which is designed to receive at least one tool and having at least one loading and unloading machine (1), wherein said at least one tool carrier (6) is movable so that both a workpiece (8) received in a first of the receptacles (2) and a workpiece (8) received in a second of the receptacles (2) can be processed with its at least one tool,
**characterised in that**
said at least two work spindles are arranged stationary and the tool carrier (6) is arranged for at least the biaxial advance movement perpendicular and parallel to the axes of rotation of the work spindles and said at least one loading and unloading machine (1) for loading and unloading the receptacles (2) is formed with workpieces.

2. The lathe according to claim 1, **characterized in that** at least one, in particular each, work spindle is assigned a tailstock (7) movable on the axis of rotation of the work spindle, wherein the receptacle (2) and the tailstock (7) of each work spindle are arranged to hold and/or to support a workpiece (8) at two ends.

3. The lathe according to one of the previous claims, **characterized in that** said at least one loading and unloading machine (1) comprises at least one robot arm (1).

4. The lathe according to one of the previous claims, **characterised in that** one or two robot arms are provided as a loading and unloading machine per work spindle.

5. The lathe according to one of the previous claims, **characterised in that** one arm is provided as a loading and unloading machine per two work spindles.

6. The lathe according to one of the previous claims, **characterised in that** a movable bulkhead (4) is provided per work spindles.

7. A method for machining workpieces (8) received in work spindles with vertical axes of rotation, wherein at least two work spindles arranged stationary are held with vertical axes of rotation and in each case a receptacle (2) for receiving a workpiece (8) and at least one loading and unloading machine (1) is held and wherein at least one tool carrier (6) is held,
**characterised in that**
the tool carrier (6) is arranged for at least the biaxial advance movement perpendicular and parallel to the axes of rotation of the work spindles and that a workpiece (8) is received for loading the work spindles, each with said at least one loading and unloading machine (1) and is used in the receptacle (2) of the work spindle to be loaded and for unloading the spindles each with said at least one loading and unloading machine (1), the workpiece (8) to be unloaded is received and removed from the receptacle (2) of the work spindle to be unloaded and
wherein the unloading and loading of workpieces (8) in the receptacle (2) of a first of the work spindles coincides with the machining of a workpiece (8) in the receptacle (2) of a second of the work spindles and at least one tool carrier of said at least one tool carrier (6) is used for machining workpieces (8) accommodated in the first receptacle (2) and workpieces (8) received in the second receptacle (2).

8. The method of claim 7, wherein for at least one of the work spindle, in particular per work spindle held, a tailstock (7) is held movable on the axis of rotation of the respective work spindle and
for loading the work spindles on at least one of the work spindles, in particular on the work spindles respectively, is moved after loading the work piece into the receptacle (2) of the work spindle to be loaded of the tailstock (7) of the work spindle to be loaded in the direction of the receptacle (2) of the work spindle to be loaded until it supports the workpiece (8) in the receptacle of the work spindle to be loaded work spindle on the receptacle (2) of the work spindle to be loaded and
for unloading at least one of the work spindles, in particular the work spindles in each case, before receiving the workpiece (8) to be unloaded with said at least one loading and unloading machine (1), the tailstock (7) of the work spindle to be unloaded in the direction of the receptacle (2) the work spindle to be unloaded is moved away.

9. The method of claim 8, wherein at least a first one of the work spindles has no associated tailstock and a workpiece to be machined (8) is first loaded into the receptacle of the first work spindle and in particular at least, in particular exclusively a face machining, centring, chuck machining and/or end face machining of a first side of the received workpiece (8) is performed and then the workpiece (8) is loaded into a receptacle of a second work spindle with associated riding mandrel and is supported on the first side of the workpiece (8) with the riding mandrel and subsequently machined with the second work spindle.

10. The method according to one of the claims 7 to 9, wherein a robot arm (1) is used as a loading and unloading machine (1) for loading and unloading the first receptacle and the second receptacle.

11. The method according to one of the claims 7 to 10, wherein each work spindle is associated with a movable bulkhead and the bulkheads are each moved in such a way so that during loading and unloading of the associated work spindle, the bulkhead of loading or unloading work spindle is arranged in such a way so that it prevents the flight of chips into the receptacle of the work spindle to be loaded or unloaded and before the machining of a workpiece received in a receptacle of a work spindle the associated bulkhead is moved in such a way that access is provided to the received workpiece for at least one tool of said at least one tool carrier.

## Revendications

1. Tour pour l'usinage de pièces (8) avec un chargement et un déchargement en temps masqué comportant au moins deux broches de travail ayant chacune un logement (2) pour une pièce d'usinage (8),
dans lequel les axes de rotation des broches de travail s'étendent verticalement, et avec au moins un porte-outil (6) conçu pour recevoir au moins un outil et comportant au moins une machine de chargement et de déchargement (1), dans lequel ledit au moins un porte-outil (6) est mobile de sorte qu'une pièce d'usinage (8) reçue dans un premier des réceptacles (2) aussi bien qu'une pièce d'usinage (8) reçue dans un second des réceptacles (2) peuvent être traitées avec leur dit au moins un outil,
**caractérisé en ce que**
lesdites au moins deux broches de travail sont agencées de façon stationnaire et le porte-outil (6) est agencé pour assurer au moins un mouvement d'avance biaxial à la fois perpendiculaire et parallèle aux axes de rotation des broches de travail et ladite au moins une machine de chargement et de déchargement (1) pour charger et décharger les réceptacles (2), est constituée de pièces d'usinage.

2. Tour selon la revendication 1, **caractérisé en ce qu'**au moins une broche de travail, en particulier chaque broche de travail, est associée à une poupée mobile (7) mobile sur l'axe de rotation de la broche de travail, dans lequel le réceptacle (2) et la poupée mobile (7) de chaque broche de travail sont agencés pour maintenir et/ou supporter une pièce d'usinage (8) à deux extrémités.

3. Tour selon l'une des revendications précédentes, **caractérisé en ce que** ladite au moins une machine de chargement et de déchargement (1) comprend au moins un bras de robot (1).

4. Tour selon l'une des revendications précédentes, **caractérisé en ce qu'**un ou deux bras de robot sont prévus comme machine de chargement et déchargement pour chaque broche de travail.

5. Tour selon l'une des revendications précédentes, **caractérisé en ce qu'**un bras de robot est prévu comme machine de chargement et déchargement pour chaque paire de broches de travail.

6. Tour selon l'une des revendications précédentes, **caractérisé en ce qu'**une cloison mobile (4) est prévue pour chaque broche de travail.

7. Procédé d'usinage de pièces (8) reçues dans des broches de travail avec des axes de rotation verticaux, dans lequel au moins deux broches de travail agencées de manière fixe sont maintenues avec des axes de rotation verticaux et dans chaque cas un réceptacle (2) est maintenu pour recevoir une pièce d'usinage (8) et au moins une machine de chargement et de déchargement (1) et dans lequel au moins un porte-outil (6) est maintenu,
**caractérisé en ce que**
le porte-outil (6) est disposé pour assurer au moins un mouvement d'avance biaxial perpendiculaire et parallèle aux axes de rotation des broches de travail et qu'une pièce à usiner (8) est reçue pour charger les broches de travail, chacune avec au moins une machine de chargement et de déchargement (1) et est utilisé dans le réceptacle (2) de la broche de travail à charger et pour décharger les broches chacune avec ladite au moins une machine de chargement et de déchargement (1), la pièce à décharger est reçue et retirée du réceptacle (2) de la broche de travail à décharger et
dans lequel le déchargement et le chargement des pièces (8) dans le réceptacle (2) d'une première des broches de travail coïncident avec l'usinage d'une pièce (8) dans le réceptacle (2) d'une seconde des broches de travail et au moins un porte-outil dudit au moins un porte-outil (6) est utilisé pour usiner des pièces (8) logées dans le premier réceptacle (2) et des pièces (8) reçues dans le second réceptacle (2).

8. Procédé selon la revendication 7, dans lequel pour au moins une des broches de travail, en particulier par broche de travail maintenue, une contre-poupée (7) est maintenue mobile sur l'axe de rotation de la broche de travail respective et
pour charger les broches de travail sur au moins l'une des broches de travail, en particulier sur les broches de travail respectivement, est déplacé après avoir chargé la pièce d'usinage dans le réceptacle (2) de la broche de travail à charger de la contre-poupée (7) de la broche de travail à charger en direction du réceptacle (2) de la broche de travail à charger jusqu'à supporter la pièce d'usinage (8) dans le réceptacle de la broche de travail à charger sur le réceptacle (2) de la broche de travail à charger et
pour décharger au moins l'une des broches de travail, en particulier les broches de travail dans chaque cas, avant de recevoir la pièce d'usinage (8) à décharger avec ladite au moins une machine de chargement et de déchargement (1), la poupée mobile (7) de la broche de travail à décharger en direction du réceptacle (2), la broche de travail à décharger est éloignée.

9. Procédé selon la revendication 8, dans lequel au moins une première des broches de travail n'a pas de contre-poupée associée et une pièce d'usinage (8) est d'abord chargée dans le réceptacle de la première broche de travail et en particulier au moins, en particulier exclusivement, un surfaçage, un centrage, un usinage à mandrin et/ou un usinage de face d'extrémité d'un premier côté de la pièce d'usinage (8) reçue est réalisé puis la pièce d'usinage (8) est chargée dans un réceptacle d'une seconde broche de travail avec un mandrin de guidage associé et est supporté sur le premier côté de la pièce d'usinage (8) avec le mandrin de guidage et ensuite usiné avec la seconde broche de travail.

10. Procédé selon l'une quelconque des revendications 7 à 9, dans lequel un bras de robot (1) est utilisé comme machine de chargement et de déchargement (1) pour charger et décharger le premier réceptacle et le second réceptacle.

11. Procédé selon l'une quelconque des revendications 7 à 10, dans lequel chaque broche de travail est associée à une cloison mobile et les cloisons sont chacune déplacées de telle manière de sorte que pendant le chargement et le déchargement de la broche de travail associée, la cloison de la broche de travail de chargement ou de déchargement est agencée de manière à empêche le vol de copeaux dans le réceptacle de la broche de travail à charger ou à décharger et avant l'usinage d'une pièce reçue dans un réceptacle d'une broche de travail, la cloison associée est déplacée de manière à ménager un accès à la pièce d'usinage reçue pour au moins un outil dudit au moins un porte-outil.
